# EUROPEAN PATENT APPLICATION

(11) **EP 4 524 794 A1**
(43) Date of publication of application: **19.03.2025**
(21) Application number: 23909212.5
(22) Date of filing: 22.08.2023
(51) Int. Cl.: G06F 21/57

(54) **PROTOTYPE CHAIN POLLUTION VULNERABILITY PROTECTION METHOD AND APPARATUS, MEDIUM AND DEVICE**

(30) Priority: 26.12.2022 CN 202211673956
(71) Applicant: Alipay (Hangzhou) Information Technology Co., Ltd., Hangzhou, Zhejiang 310000 (CN)
(72) Inventor: LI, Ping, Hangzhou, Zhejiang 310000 (CN)
(74) Representative: Fish & Richardson P.C.
(86) International application number: PCT/CN2023/114294
(87) International publication number: WO 2024/139272

(57) **Abstract**

Embodiments of this specification provide a prototype chain pollution vulnerability protection method and apparatus, a medium, and a device. The method includes: detecting whether a request interface receives a request; starting an aspect proxy function pre-injected into the request interface, if the request interface receives the request; and detecting, by the aspect proxy function, whether the request contains a prototype property, and intercepting the request if the request contains the prototype property. This application can avoid exploits caused by prototype chain pollution.

## Description

### TECHNICAL FIELD

One or more embodiments of this specification relate to the field of application security technologies, and in particular, to a prototype chain pollution vulnerability protection method and apparatus, a medium, and a device.

### BACKGROUND

In JavaScript, object inheritance is implemented through a prototype chain. Therefore, if a prototype of an object is modified, all objects that inherit from the prototype are affected, which is prototype chain pollution. Prototype chain pollution may cause denial-of-service (DoS) attacks, remote code/command execution (RCE) exploits, and property injection exploits, which threaten security of a Node application.

### SUMMARY

One or more embodiments of this specification describe a prototype chain pollution vulnerability protection method and apparatus, a medium, and a device, so as to prevent exploits caused by prototype chain pollution.

According to a first aspect, a prototype chain pollution vulnerability protection method is provided. The method includes: detecting whether a request interface receives a request; starting an aspect proxy function pre-injected into the request interface, if the request interface receives the request; and detecting, by the aspect proxy function, whether the request contains a prototype property, and intercepting the request if the request contains the prototype property.

According to a second aspect, a prototype chain pollution vulnerability protection apparatus is provided. The apparatus includes: a request detection module, configured to detect whether a request interface receives a request; a function starting module, configured to start an aspect proxy function pre-injected into the request interface, if the request interface receives the request; and a first detection module, configured to detect, by the aspect proxy function, whether the request contains a prototype property, and intercept the request if the request contains the prototype property.

According to a third aspect, a computer-readable storage medium having stored thereon a computer program is provided. The computer program, when executed in a computer, causes the computer to perform the method provided in the first aspect.

According to a fourth aspect, a computing device including a memory and a processor is provided. The memory stores executable code, and the processor, upon executing the executable code, implements the method provided in the first aspect.

Any one or a combination of the prototype chain pollution vulnerability protection method and apparatus, the medium, and the device provided in the embodiments of this specification has the following beneficial effects: (1) An aspect proxy function is pre-injected into the request interface. When the request interface receives the request, the aspect proxy function starts a detection procedure, so as to detect whether the request contains a prototype property, and intercept the request if the prototype property is detected. Since the prototype property is a key property that causes prototype chain pollution, the request is intercepted if the prototype property is detected, thereby avoiding various subsequent exploits caused by the prototype chain pollution. An embodiment of this application provides a protection mechanism, in which an application does not need to manually upgrade an NPM package, nor does it rely on a publishing and deployment procedure of the NPM package. Therefore, this obviates the need to wait for an official safe version, providing an effect of emergency vulnerability mitigation without service interruption.

(2) In an embodiment, an aspect proxy function is pre-injected into an object recursive merge class function. As such, when a user inputs a required parameter of the object recursive merge class function, the aspect proxy function injected into the object recursive merge class function is started, and then detection logic is started, so as to detect whether the input parameter of the object recursive merge class function contains a prototype property. If the input parameter contains the prototype property, an object copy operation of the object recursive merge class function is intercepted. If the input parameter does not contain the prototype property, the object recursive merge class function may be allowed to complete a normal object copy operation. This can prevent the object recursive merge class function from being a dangerous function that causes prototype chain pollution.

(3) In an embodiment, an aspect proxy function is pre-injected into a path-defined property class function. As such, when a user inputs a specified path, the aspect proxy function injected into the path-defined property class function is started, and then detection logic is started, so as to detect whether the specified path of the path-defined property class function contains a prototype property. If the specified path contains the prototype property, a path valuation operation of the path-defined property class function is intercepted. If the specified path does not contain the prototype property, the path-defined property class function may be allowed to complete a normal path valuation operation. This can prevent the path-defined property class function from being a dangerous function that causes prototype chain pollution.

### BRIEF DESCRIPTION OF DRAWINGS

In order to illustrate the technical solutions of the embodiments of this specification more clearly, the following briefly describes the accompanying drawing for describing the embodiments. Clearly, the accompanying drawings in the following description show some embodiments of this specification, and those of ordinary skill in the art can obtain other drawings from these accompanying drawings without any creative efforts.
FIG. 1 is a schematic flowchart illustrating a prototype chain pollution vulnerability protection method, according to an embodiment of this specification; and
FIG. 2 is a block diagram illustrating a structure of a prototype chain pollution vulnerability protection apparatus, according to an embodiment of this specification.

### DESCRIPTION OF EMBODIMENTS

The following describes the solutions provided in this specification with reference to the accompanying drawings.

As mentioned in Background, prototype chain pollution may cause denial-of-service attacks, remote code/command execution exploits, and property injection exploits, which threaten security of a Node application. To ensure the security of the Node application, code scanning or the like may be used to detect whether an unsafe version of an NPM package that contains a prototype chain pollution vulnerability has been introduced into the Node application, and then the Node application is pushed to upgrade the NPM package to a safe version. However, this requires the Node application to upgrade code, re-publish and deploy the NPM package, and relies on the publishing of the NPM package. The whole recovery and governance cycle may be long, and thus the risk exposure cycle is long, making it impossible to resist emerging exploits in a timely manner. The full name of NPM is Node Package Manager, which is a NodeJS package management and distribution tool and has become a standard for unofficial Node modules. The Node application is an application of a server script language.

In view of this, according to a first aspect, an embodiment of this specification provides a prototype chain pollution vulnerability protection method. The method includes: when a request interface receives a request, starting an aspect proxy function pre-injected into the request interface, such that the aspect proxy function detects whether the request contains a prototype property, and intercepts the request if the request contains the prototype property.

The following describes specific implementations of the above-mentioned concept.

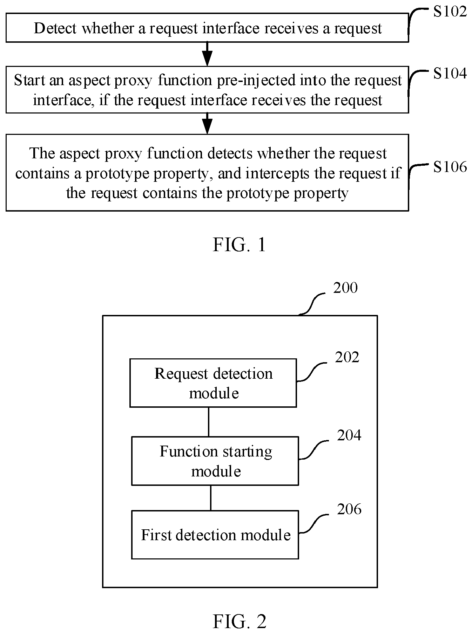

FIG. 1 is a schematic flowchart illustrating a prototype chain pollution vulnerability protection method, according to an embodiment of this application. It can be understood that the method can be performed by any apparatus, device, platform, or device cluster that has computing and processing capabilities. Referring to FIG. 1, the prototype chain pollution vulnerability protection method includes step S102 to step S106.

S102: Detect whether a request interface receives a request.

S104: Start an aspect proxy function pre-injected into the request interface, if the request interface receives the request.

S106: The aspect proxy function detects whether the request contains a prototype property, and intercepts the request if the request contains the prototype property.

In the prototype chain pollution vulnerability protection method shown in FIG. 1, the aspect proxy function is pre-injected into the request interface. When the request interface receives the request, the aspect proxy function starts a detection procedure, so as to detect whether the request contains a prototype property, and intercept the request if the prototype property is detected. Since the prototype property is a key property that causes prototype chain pollution, the request is intercepted if the prototype property is detected, thereby avoiding various subsequent exploits caused by the prototype chain pollution. An embodiment of this application provides a protection mechanism, in which an application does not need to manually upgrade an NPM package, nor does it rely on a publishing and deployment procedure of the NPM package. Therefore, this obviates the need to wait for an official safe version, providing an effect of emergency vulnerability mitigation without service interruption.

The following describes an execution manner of each step in FIG. 1.

S102: Detect whether a request interface receives a request. That is, it is detected whether the request interface receives the request, and S104 is performed when the request is received.

S104: Start an aspect proxy function pre-injected into the request interface, if the request interface receives the request, where the aspect proxy function may be pre-instrumented to the request interface through a base module of a security aspect. The aspect proxy function is used to detect a prototype property and performs an interception operation when the request contains the prototype property.

The security aspect refers to a security parallel aspect framework, which is a next-generation native security infrastructure. The security aspect integrates and decouples security control and services through aspects at various levels of end, pipe, and cloud, and provides services with accurate insights and efficient intervention capabilities based on standardized interfaces, having core advantages of strong awareness and coverage capabilities, fast response to emergency attack and defense, efficient security governance, and flexible security deployment. The security aspect extends the concept of aspect-oriented programming to the construction of a security framework, to construct a security parallel space that orthogonally integrates with the services, thereby realizing the concept of a higher-dimensional security protection framework without modifying normal logic of the services.

A main function of the base module of the security aspect is program instrumentation. The program instrumentation refers to inserting some probes into a tested program while ensuring original logic integrity of the program. The probes are in essence code segments for information detection. By executing the probes, it is determined whether the request contains a prototype property, and an interception operation is performed when the request contains the prototype property.

S106: The aspect proxy function detects whether the request contains a prototype property, and intercepts the request if the request contains the prototype property.

Specifically, when the request interface receives the request, the aspect proxy function pre-injected into the request interface is started, such that the aspect proxy function detects whether the request contains a prototype property, and intercepts the request if the request contains the prototype property.

An aspect proxy function may be pre-injected into an http request interface. As such, when the http request interface receives an http request, the aspect proxy function is started, so that the aspect proxy function performs detection logic on the http request.

In addition, an aspect proxy function may be pre-injected into an rpc request interface. As such, when the rpc request interface receives an rpc request, the aspect proxy function is started, so that the aspect proxy function performs detection logic on the rpc request.

It may be understood that the full name of http is Hypertext Transfer Protocol. The full name of rpc is Remote Procedure Call.

It can be determined that in an embodiment, the request interface may be the http request interface and/or the RPC request interface.

For example, in JavaScript, there is only one structure, namely, objects. Each object has a private property, i.e., a prototype property, which points to a prototype object of its constructor. The prototype object also has its own prototype object, and this continues upwards layer by layer until a prototype object is null. To access a property of an object, not only the object itself is searched, but also a prototype chain of the object is searched up layer by layer until the property is matched or the top of the prototype chain, i.e., null, is reached. If a prototype object is modified, all objects that inherit from this prototype are affected; that is, prototype chain pollution occurs.

Specifically, when a polluted property comes from an object, greater destruction may be caused by prototype chain pollution. For example, overwriting the default toString method and valueOf method of the object may cause the entire program to stop running, resulting in a DoS attack. If a polluted property of an object is executed in code, an attacker can execute relevant commands, resulting in an RCE exploit. If the prototype chain pollution causes the injection of properties related to permission and identity, such as cookie pollution, all users may have a common session. It can be determined that various exploits may be caused.

The ToString method is used to return a string of an object "represented in text", with a result being a concise but easy-to-understand information expression. The valueOf method is used to convert an object into a desired type.

DoS, that is, Denial of Service, refers to a denial-of-service cyber-attack, seeking to make a computer or a network unable to provide a normal service such that a normal user cannot access the service.

RCE, that is, Remote Command/Code Execution, is a remote code/command execution exploit, in which an attacker can directly inject an operating system command or code into a background server remotely on a web page, so as to control the background system.

In property injection, for example, if a prototype type of a class is polluted in JavaScript, all objects that are not explicitly defined will be affected, in particular, property pollution related to permission and identity.

To avoid exploits such as denial-of-service attacks, remote code/command execution exploits, and property injection caused by prototype chain pollution, a request interface is used as an injection point of an aspect proxy function using an aspect technology, to inject the aspect proxy function. When a request arrives, a detection procedure is performed to detect whether the body content of the request contains a prototype property, i.e., a "_proto_" property. If the property is contained, the request is intercepted. If the request is not contained, the request is not intercepted, and a corresponding parameter is returned to a sender of the request.

It can be determined that, based on the aspect technology, this embodiment of this application implements a common prototype chain pollution vulnerability protection mechanism without upgrading or interrupting an application code service, thereby effectively protecting against prototype chain pollution exploits.

The aspect technology is a technology that dynamically adds a function to a program in a unified manner without modifying source code in a pre-compilation manner and a runtime dynamic proxy manner. The aspect proxy function is a method or a function that needs to dynamically add an enhanced function based on the aspect technology.

In an embodiment, an injection point of the aspect proxy function at the request interface may be a code position after the request interface receives the request and before logic of the request is executed.

In other words, the injection point of the aspect proxy function is a code position after the request interface receives the request, and the code position is located before the logic of the request itself is executed. After receiving the request, the request interface does not execute the logic corresponding to the request, but directly starts the aspect proxy function for detection. If no prototype property is detected, the request interface starts executing the logic corresponding to the request, and then returns the corresponding parameter to the sender of the request.

In an embodiment, an injection point of the aspect proxy function at the request interface may be a corresponding code position after logic of the request is executed and before the request interface returns a parameter to a sender of the request.

In other words, after receiving the request, the request interface starts the aspect proxy function to execute the detection logic, and executes the logic corresponding to the request, so as to obtain a related output parameter. If the aspect proxy function detects the prototype property, the request interface does not return the corresponding output parameter to the sender of the request. If the aspect proxy function detects no prototype property, the request interface returns the corresponding output parameter to the sender of the request.

It can be determined that there may be multiple choices of the injection point of the aspect proxy function, which may be selected according to specific scenarios or needs.

It may be understood that a key dangerous function that is prone to prototype chain pollution is proxied by using an aspect technology, and it is detected whether a parameter of the key dangerous function contains a prototype property that causes the prototype chain pollution. However, there are many dependent methods with prototype chain pollution vulnerabilities in actual development, many prototype chain pollution vulnerabilities are unknown, and thus these methods cannot be proxied one by one for protection. However, in an actual attack scenario, an attacker usually transfers a prototype property through a request interface of a Node application, to cause prototype chain pollution. Therefore, in the method provided in this embodiment of this application, an http/rpc request method is used as a key method for aspect proxy detection, and an original method is proxied by using the aspect technology to add detection logic of prototype chain pollution.

In an embodiment, this embodiment of this application may further include: when an object recursive merge class function receives an input parameter, starting an aspect proxy function pre-injected into the object recursive merge class function, such that the aspect proxy function detects whether the input parameter contains a prototype property, and intercepts an object copy operation of the object recursive merge class function if the input parameter contains the prototype property.

In other words, in this embodiment of this application, on the basis of pre-injecting the aspect proxy function into the request interface, the aspect proxy function is further pre-injected into the object recursive merge class function, so as to further avoid a prototype chain pollution vulnerability introduced by unsafe object recursive merges.

The object recursive merge class function is a type of function, for example, lodash.merge.

For example, when an object copy is performed in JavaScript, a native object copy method, that is, Object.assign, can only implement a deep copy of a first layer of object property, and an object property after the first layer is still a shallow copy. Therefore, in a development process, if a deep copy of an object is required, an object recursive merge function dangerDeepClone may be introduced. When a user inputs a source object for the object recursive merge function dangerDeepClone, if the source object input by the user includes a dangerous object with a prototype property, a prototype property of the object car1 will be changed to {"isAdmin": True} after the object copy is performed by using the object recursive merge function dangerDeepClone. Therefore, if a new object car2 is constructed using an object constructor, the admin permission of the prototype property of the object car2 can be found to be controlled by "isAdmin". In this case, all Car instance objects have the admin permission, which causes a privilege escalation attack.

Because everything is an object in JavaScript, if the polluted prototype is an object of a prototype type, that is, Object.prototype, the scope and destruction of the prototype chain pollution are greater, which may cause the entire program to stop running, resulting in the above-mentioned DoS attack.

In view of this, in this embodiment of this application, an aspect proxy function may further be pre-injected into an object recursive merge class function. As such, when a user inputs a required parameter of the object recursive merge class function, the aspect proxy function injected into the object recursive merge class function is started, and then detection logic is started, so as to detect whether the input parameter of the object recursive merge class function contains a prototype property. If the input parameter contains the prototype property, an object copy operation of the object recursive merge class function is intercepted. If the input parameter does not contain the prototype property, the object recursive merge class function can be allowed to complete a normal object copy operation. This can prevent the object recursive merge class function from being a dangerous function that causes prototype chain pollution.

In an embodiment, the method provided in this embodiment of this application may further include: when a path-defined property class function receives a specified path, starting an aspect proxy function pre-injected into the path-defined property class function, such that the aspect proxy function detects whether the specified path contains a prototype property, and intercepts a path valuation operation of the path-defined property class function if the specified path contains the prototype property.

The path-defined property class function is a type of function that defines a property according to a path.

For example, many JavaScript third-party libraries provide a method of modifying or defining an object property according to a specified path, which may be in the following form: Function defineObj ectPropByPath(object,path,value){ }.

The function defineObjectPropByPath is used to modify a property value of a specified path of an object to value. If the specified path input by the user is "_proto_.isAdmin", "_proto_.isAdmin" may be injected into the prototype-type object, that is, Object.prototype, by using the defineObjectPropByPath method, causing a wide scope of impact.

In view of this, in this embodiment of this application, an aspect proxy function may further be pre-injected into a path-defined property class function. As such, when a user inputs a specified path, the aspect proxy function injected into the path-defined property class function is started, and then detection logic is started, so as to detect whether the specified path of the path-defined property class function contains a prototype property. If the specified path contains the prototype property, a path valuation operation of the path-defined property class function is intercepted. If the specified path does not contain the prototype property, the path-defined property class function can be allowed to complete a normal path valuation operation. This can prevent the path-defined property class function from being a dangerous function that causes prototype chain pollution.

It can be determined that, in this embodiment of this application, on the basis of injecting the aspect proxy function into the request interface, an aspect proxy function is also injected into a corresponding function for the two specific scenarios: a prototype chain pollution vulnerability introduced by unsafe object recursive merges and a prototype chain pollution vulnerability introduced by defining a property by a path, thereby providing further protection.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular sequence or consecutive sequence to achieve the desired results. In some implementations, multi-tasking and concurrent processing are feasible or can be advantageous.

According to a second aspect, an embodiment of this application provides a prototype chain pollution vulnerability protection apparatus.

Referring to FIG. 2, the apparatus 200 includes: a request detection module 202, configured to detect whether a request interface receives a request; a function starting module 204, configured to start an aspect proxy function pre-injected into the request interface, if the request interface receives the request; and a first detection module 206, configured to detect, by the aspect proxy function, whether the request contains a prototype property, and intercept the request if the request contains the prototype property.

In an embodiment, the apparatus further includes a second detection module, configured to, when an object recursive merge class function receives an input parameter, start an aspect proxy function pre-injected into the object recursive merge class function, such that the aspect proxy function detects whether the input parameter contains a prototype property, and intercepts an object copy operation of the object recursive merge class function if the input parameter contains the prototype property.

In an embodiment, the apparatus further includes a third detection module, configured to, when a path-defined property class function receives a specified path, start an aspect proxy function pre-injected into the path-defined property class function, such that the aspect proxy function detects whether the specified path contains a prototype property, and intercepts a path valuation operation of the path-defined property class function if the specified path contains the prototype property.

In an embodiment, an injection point of the aspect proxy function at the request interface is a code position after the request interface receives the request and before logic of the request is executed.

In an embodiment, an injection point of the aspect proxy function at the request interface is a corresponding code position after logic of the request is executed and before the request interface returns a parameter to a sender of the request.

In an embodiment, the request interface is the http request interface and/or the RPC request interface.

It may be understood that, for the explanations, specific implementations, beneficial effects, examples, etc. of content related to the apparatus provided in this embodiment of this application, refer to the corresponding parts of the method provided in the first aspect, and details are omitted here for simplicity.

According to a third aspect, an embodiment of this specification provides a computer-readable storage medium having stored thereon a computer program that, when executed in a computer, causes the computer to perform the method in any one of the embodiments of this specification.

Specifically, a system or apparatus equipped with a storage medium may be provided. The storage medium has stored thereon software program code for implementing a function of any one of the above-mentioned embodiments, and a computer (or a CPU or an MPU) of the system or apparatus reads and executes the program code stored on the storage medium.

In this case, the program code read from the storage medium may implement the function of any one of the above-mentioned embodiments, and therefore the program code and the storage medium storing the program code form a part of this application.

In addition, it should be clear that an operating system that operates on the computer may be caused to complete some or all of the actual operations not only by executing the program code read from the computer but also by using instructions based on the program code, so as to implement the function of any one of the above-mentioned embodiments.

In addition, it may be understood that, the program code read from the storage medium is written into a memory disposed on an extension board inserted into the computer, or into a memory disposed on an extension module connected to the computer, and then the instructions based on the program code cause a CPU or the like installed on the extension board or the extension module to perform some and all of the actual operations, so as to implement the function of any one of the above-mentioned embodiments.

It may be understood that, for the explanations, specific implementations, beneficial effects, examples, etc. of content related to the computer-readable medium provided in this embodiment of this application, refer to the corresponding parts of the method provided in the first aspect, and details are omitted here for simplicity.

According to a fourth aspect, an embodiment of this specification provides a computing device, including a memory and a processor. The memory stores executable code, and the processor, upon executing the executable code, implements the method in any one of the embodiments of this specification.

It may be understood that, for the explanations, specific implementations, beneficial effects, examples, etc. of content related to the computing device provided in this embodiment of this application, refer to the corresponding parts of the method provided in the first aspect, and details are omitted here for simplicity.

It may be understood that the structure illustrated in this embodiment of this specification does not constitute a specific limitation on the apparatus in this embodiment of this specification. In some other embodiments of this specification, the above-mentioned apparatus may include more or less components than those shown in the figure, or may combine some components, or may split some components, or may have different component arrangements. The illustrated components can be implemented by hardware, software, or a combination of software and hardware.

Because content such as information exchanges and execution processes between the modules of the above-mentioned apparatuses and systems are based on a same concept as the method embodiments of this specification, for specific content, reference can be made to the description in the method embodiments of this specification. Details are omitted here for simplicity.

The embodiments of this specification are described in a progressive way. For same or similar parts of the embodiments, mutual references can be made to the embodiments. Each embodiment focuses on a difference from other embodiments. In particular, for the apparatus embodiment, because the apparatus embodiment is basically similar to the method embodiment, description is relatively simple. For related parts, refer to the description of the method embodiment.

Those skilled in the art should be aware that in one or more of the above-mentioned examples, the functions described in this application may be implemented by hardware, software, firmware, or any combination thereof. When implemented by software, these functions may be stored in a computer-readable medium or transmitted as one or more instructions or codes on the computer-readable medium.

The objectives, technical solutions, and beneficial effects of this application are further described in detail by the specific implementations described above. It should be understood that those described above are merely specific implementations of this application, and are not used to limit the scope of protection of this application. Any modifications, equivalent replacements, improvements etc. that are based on the technical solutions of this application shall fall within the scope of protection of this application.

## Claims

1. A prototype chain pollution vulnerability protection method, comprising:
detecting whether a request interface receives a request;
starting an aspect proxy function pre-injected into the request interface, if the request interface receives the request; and
detecting, by the aspect proxy function, whether the request contains a prototype property, and intercepting the request if the request contains the prototype property.

2. The method according to claim 1, further comprising:
when an object recursive merge class function receives an input parameter, starting an aspect proxy function pre-injected into the object recursive merge class function, such that the aspect proxy function detects whether the input parameter contains a prototype property, and intercepts an object copy operation of the object recursive merge class function if the input parameter contains the prototype property.

3. The method according to claim 1, further comprising:
when a path-defined property class function receives a specified path input by a user, starting an aspect proxy function pre-injected into the path-defined property class function, such that the aspect proxy function detects whether the specified path contains a prototype property, and intercepts a path valuation operation of the path-defined property class function if the specified path contains the prototype property.

4. The method according to claim 1, wherein an injection point of the aspect proxy function at the request interface is a code position after the request interface receives the request and before logic of the request is executed.

5. The method according to claim 1, wherein an injection point of the aspect proxy function at the request interface is a corresponding code position after logic of the request is executed and before the request interface returns a parameter to a sender of the request.

6. The method according to claim 1, wherein the request interface is an http request interface and/or an RPC request interface.

7. A prototype chain pollution vulnerability protection apparatus, comprising:
a request detection module, configured to detect whether a request interface receives a request;
a function starting module, configured to start an aspect proxy function pre-injected into the request interface, if the request interface receives the request; and
a first detection module, configured to detect, by the aspect proxy function, whether the request contains a prototype property, and intercept the request if the request contains the prototype property.

8. The apparatus according to claim 7, further comprising:
a second detection module, configured to, when an object recursive merge class function receives an input parameter, start an aspect proxy function pre-injected into the object recursive merge class function, such that the aspect proxy function detects whether the input parameter contains a prototype property, and intercepts an object copy operation of the object recursive merge class function if the input parameter contains the prototype property.

9. A computer-readable storage medium having stored thereon a computer program that, when executed in a computer, causes the computer to perform the method according to any one of claims 1 to 6.

10. A computing device, comprising a memory and a processor, wherein the memory stores executable code, and the processor, upon executing the executable code, implements the method according to any one of claims 1 to 6.
